# EUROPEAN PATENT SPECIFICATION

(11) **EP 3 775 552 B1**
(45) Date of publication and mention of the grant of the patent: **05.05.2021**
(21) Application number: 20706048.4
(22) Date of filing: 06.02.2020
(51) Int. Cl.: F04B 43/00, F04B 43/067, A01J 11/16

(54) **DOUBLE MEMBRANE PUMP FOR USE IN A HOMOGENISING APPARATUS OF A FLUID PRODUCT AND METHOD FOR DETECTING LEAKAGES IN SAID PUMP**
DOPPELMEMBRANPUMPE ZUR VERWENDUNG IN EINER VORRICHTUNG ZUR HOMOGENISIERUNG EINES FLÜSSIGEN PRODUKTS UND VERFAHREN ZUR ERKENNUNG VON LECKAGEN IN DER PUMPE
POMPE À DOUBLE MEMBRANE UTILISÉE DANS UN APPAREIL D'HOMOGÉNÉISATION D'UN PRODUIT FLUIDE ET PROCÉDÉ DE DÉTECTION DE FUITES DANS LADITE POMPE

(30) Priority: 12.06.2019 IT 201900008754
(43) Date of publication of application: 17.02.2021
(73) Proprietor: GEA Mechanical Equipment Italia S.p.A., 43123 Parma (IT)
(72) Inventor: TONELLI, Annachiara, 43123 Parma (IT); MAGGI, Leonardo, 43123 Parma (IT); BENASSI, Massimiliano, 43123 Parma (IT); FOLEZZANI, Matteo, 43123 Parma (IT)
(74) Representative: Dondi, Silvia
(86) International application number: PCT/IB2020/050943
(87) International publication number: WO 2020/250042

(56) References cited:
- US-A- 4 881 876
- US-A- 5 062 770
- US-A1- 2012 011 998
- US-B2- 10 100 830

## Description

### Technical field

The present invention to a double membrane pump for use in a homogenising apparatus of a fluid product and a method for detecting leaks in the pump.

### Background art

The invention proposed here is used in the food industry, in particular in the dairy sector. The invention can also be used in the chemical, pharmaceutical or cosmetic industry.

Even though in varying, currently known embodiments, a homogenising apparatus comprises a high-pressure pump and a homogenising valve that act on the fluid products containing particles in order to:
- crush the particles to make their dimensions uniform, reducing the average size and the variance of the distribution in order to stabilise the product and to increase its *shelf-life* in the case of emulsions;
- break the cell membranes in order to facilitate the extraction of the active ingredients in the case of pharmaceutical applications;
- modify the structure of the particles in the case of chemical applications and cellulose.

In this context, the attention is focused on the pumping system.

The use of membrane (or diaphragm) pumps is known that employ a flexible member - precisely the "membrane" or "diaphragm" - for transmitting the pulsing force to the fluid to homogenise, ensuring the separation of the fluid itself with respect to the (contaminated) outside environment.

For example, document US 2012/0011998 shows a membrane pump in which the flexible member acts as a separator element between a containment chamber of the fluid to homogenise and a hydraulic chamber, containing oil, in which a piston is housed.

The flexible member of US 2012/0011998 is preferably formed by two membranes arranged in such a way as to define an intermediate chamber. The membranes are associated with a detection system of leakages caused by the breakage or damage of one of the two membranes, which comprises a pressure sensor capable of detecting variations in pressure associated with these leakages.

The method for detecting leakages described above does not allow identifying the membrane which is actually damaged. As a result of damage to the membrane in contact with the oil, the system for detecting leakages therefore sends a signal that triggers a stop of the machine. In this case, the stop of the machine could be avoided since the "product-side" membrane is still intact and ensures the separation from the contaminated area.

### Disclosure of the invention

In this context, the technical task underpinning the present invention is to provide a double membrane pump for use in a homogenising apparatus of a fluid product and a method for detecting leakages in the pump, which obviate the drawbacks of the prior art cited above.

In particular, an object of the present invention is to propose a double membrane pump for use in a homogenising apparatus of a fluid product in which it is possible to detect the damage of one or the other membrane and to stop of the homogenising apparatus only when actually necessary. Another object of the present invention is to propose a method for detecting leakages in a double membrane pump, accurately localising them without having to disassemble the pump.

The technical task mentioned and the objects specified are substantially achieved by a double membrane pump for use in a homogenising apparatus of a fluid product, comprising:
- a pump body;
- a first housing chamber housing the fluid product to homogenise, said first chamber being obtained in the pump body;

- a second housing chamber housing a hydraulic fluid, which is obtained in the pump body;
- a first membrane and a second membrane mutually spaced in such a way as to define an intermediate chamber containing a service fluid, said intermediate chamber being obtained in the pump body, said first membrane being interposed between the first chamber and the intermediate chamber so as to separate them, said second membrane being interposed between the intermediate chamber and the second chamber so as to separate them;
- a piston partially housed in the second chamber and slidably mounted therein;
- a device for detecting leakages through at least one of said membranes,
   characterised in that the device for detecting leakages comprises:
- at least one first sensor configured to detect a physical magnitude representing a property of the fluid present in the intermediate chamber;
- a control module configured to establish if the physical magnitude detected by the first sensor is associated with a first condition that is indicative of the mixing of the service fluid with the fluid product, or if the physical magnitude detected is associated with a second condition that is indicative of the mixing of the service fluid with the hydraulic fluid, or if the physical magnitude detected is associated with a third condition that is indicative of the mixing of the service fluid both with the fluid product and the hydraulic fluid.

In accordance with one embodiment, the device for detecting leakages further comprises a memory configured to store:
- a first interval of values of the physical magnitude associated with the first condition;
- a second interval of values of the physical magnitude associated with the second condition;
- a third interval of values of the physical magnitude (S) associated with the third condition.

The first interval of values, the second interval of values and the third interval of values are distinct and not overlapped.

In this embodiment, the control module is configured to establish if the physical magnitude detected by the first sensor falls within the first interval of values or within the second interval of values or within the third interval of values.

In accordance with another embodiment, the device for detecting leakages comprises a memory configured to store:
- a first threshold of the physical magnitude, said first threshold being associated with said first condition;
- a second threshold of said physical magnitude, said second threshold being associated with said second condition;
- a third threshold of said physical magnitude, said third threshold being associated with said third condition.

The first threshold, the second threshold and the third threshold are distinct.

In this embodiment, the control module is configured to establish if the physical magnitude detected by the first sensor is below only one, two or all three of the thresholds.

Preferably, the control module is also configured to compare the physical magnitude detected by the first sensor with a reference value indicative of the service fluid at the pure state and, in response to a variance from said reference value that is higher than a pre-established tolerance, is configured to generate a warning signal and/or a current signal.

For example, the warning signal is of the acoustic and/or luminous type. Preferably, the double membrane pump also comprises a measurement chamber located outside the pump body. The measurement chamber is in fluid communication with the intermediate chamber.

In accordance with one embodiment, the first sensor is arranged on a first wall delimiting the measurement chamber or is at least partially immersed in the fluid contained in the measurement chamber.

In a configuration called "pulse echo", the device for detecting leakages further comprises a reflector arranged on a second wall (opposite the first wall) delimiting the measurement chamber.

The first sensor is an ultrasound sensor configured to generate sound waves having a frequency comprised between 20 kHz and 100 MHz and to receive the sound waves reflected back by said reflector.

The physical magnitude is therefore a characteristic physical magnitude of the sound waves, for example chosen among: speed of the sound wave in the fluid contained in the measurement chamber, acoustic impedance of the fluid contained in the measurement chamber, travel time of the sound wave, attenuation of the sound wave in the fluid contained in the measurement chamber, spectrum of the reflected sound wave, amplitude of the reflected wave.

In a configuration called "through transmission", the device for detecting leakages comprises a second sensor (instead of the reflector) arranged on a second wall (opposite the first wall) delimiting the measurement chamber or at least partially immersed in the fluid contained in the measurement chamber.

The second sensor is an ultrasound sensor configured to generate sound waves having a frequency comprised between 20 kHz and 100 MHz. The first sensor is therefore an ultrasound sensor configured to receive these sound waves.

Also here, the physical magnitude is a characteristic physical magnitude of the sound waves, for example chosen among: speed of the sound wave in the fluid contained in the measurement chamber, acoustic impedance of the fluid contained in the measurement chamber, travel time of the sound wave, attenuation of the sound wave in the fluid contained in the measurement chamber, resonance frequency.

Preferably, in all the proposed embodiments, the device for detecting leakages comprises a temperature sensor.

The technical task mentioned and the objects specified are substantially achieved by a method for detecting leakages of a service fluid contained within two membranes that separate a hydraulic section containing a hydraulic fluid from a working section containing a fluid product to homogenise in a double membrane pump, comprising the steps of:
- detecting a physical magnitude representing a property of the fluid contained within the membranes;
- establishing if the physical magnitude detected is associated with a first condition that is indicative of the mixing of the service fluid with the fluid product, or if it is associated with a second condition that is indicative of the mixing of the service fluid with the hydraulic fluid, or if it is associated with a third condition that is indicative of the mixing of the service fluid both with the fluid product and the hydraulic fluid.

In accordance with one embodiment, the step of establishing if the physical magnitude detected is associated with the first or the second or the third condition consists in verifying if said physical magnitude falls within a first interval of values associated with the first condition or within a second interval of values associated with the second condition or within a third interval of values associated with the third condition.

The first interval of values, the second interval of values and the third interval of values are distinct and not overlapped.

Preferably, the method also comprises a step of comparing the physical magnitude detected with a reference value indicative of the service fluid in the pure state and, in response to a variance from said reference value that is higher than a pre-established tolerance, a step of generating a warning signal and/or a current signal.

Preferably, the method also comprises the steps of:
- generating a first sound wave having a frequency comprised between 20 kHz and 100 MHz and sending it to the service fluid;
- receiving the first sound wave after it has passed through the service fluid, said physical magnitude being a characteristic physical magnitude of the first sound wave so that the step of detecting said physical magnitude is carried out by measuring said physical magnitude in the first sound wave received after it has passed through the service fluid.

In accordance with one embodiment, the generation of the first sound wave and the receipt of the first sound wave after it has passed through the service fluid are carried out by two different ultrasound sensors.

For example, the physical magnitude is chosen among: speed of the sound wave in the service fluid, acoustic impedance of the service fluid, travel time of the sound wave, attenuation of the sound wave in the service fluid, resonance frequency.

In accordance with another embodiment, the first sound wave is generated by a first ultrasound sensor, is reflected back by a reflector and is received by the first ultrasound sensor.

In this case, the physical magnitude is chosen among: speed of the sound wave in the service fluid, acoustic impedance of the service fluid, travel time of the sound wave, attenuation of the sound wave in the service fluid, spectrum of the reflected sound wave, amplitude of the reflected signal.

In accordance with a further embodiment, the method further comprises the steps of:
- generating a first light radiation in the infrared or near infrared spectrum and sending it to the service fluid;
- receiving the first light radiation after it has passed through the service fluid.

In this embodiment, the physical magnitude is a characteristic physical magnitude of the first light radiation for which the step of detecting said physical magnitude is carried out by measuring said physical magnitude in the first light radiation received after passing through the service fluid.

### Brief description of drawings

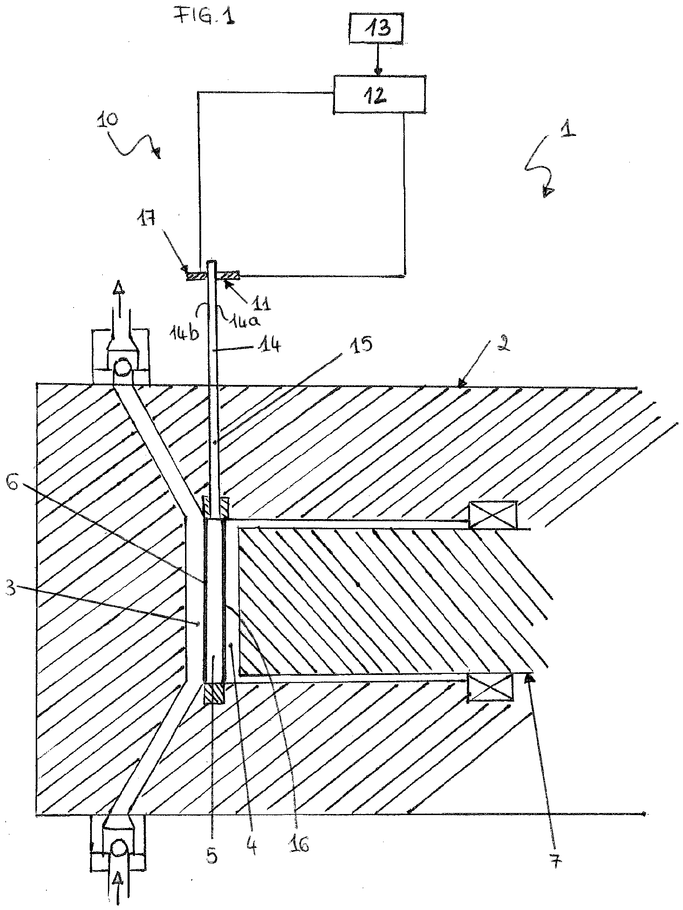

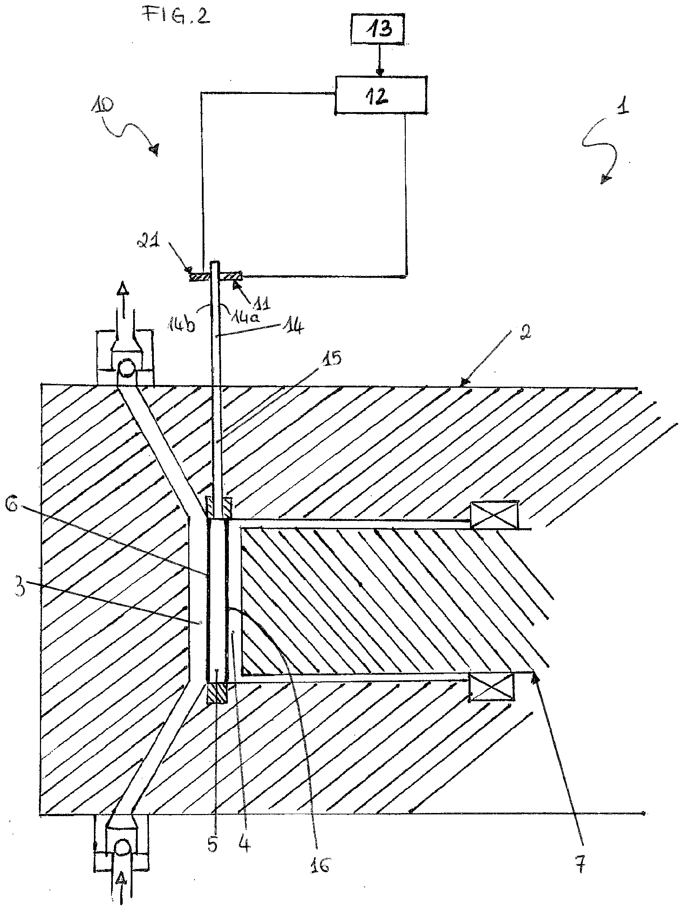

Further characteristics and advantages of the present invention will become more apparent from the indicative, and thus non-limiting, description of a preferred, but not exclusive, embodiment of a homogenising apparatus of a fluid product and a method for detecting leakages in the pump, as shown in the drawings in which figures 1 and 2 schematically show a double membrane pump for use in a homogenising apparatus of a fluid product, in accordance with the present invention, respectively in a first and a second embodiment.

### Detailed description of preferred embodiments of the invention

With reference to the figures, the number 1 indicates a double membrane pump, in particular for use in a homogenising apparatus of a fluid product P1.

The double membrane pump comprises a pump body 2 inside which three distinct chambers are obtained:
- a first chamber 3 housing the fluid product P1 to homogenise;
- a second chamber 4 housing a hydraulic fluid P2;
- an intermediate chamber 5 housing a service fluid P3.

The intermediate chamber 5 is interposed between the first chamber 3 and the second chamber 4 and is separated therefrom thanks to two membranes 6, 16. The two membranes 6, 16 are mutually spaced in such a way as to define the intermediate chamber 5.

In particular, a first membrane 6 separates the intermediate chamber 5 from the first chamber 3 and a second membrane 16 separates the intermediate chamber 5 from the second chamber 4.

A piston 7 is partially housed in the second chamber 4. The double membrane pump 1 comprises movement means (not shown) operatively active on the piston 7 to make it slide linearly inside the second chamber 4. In particular, the piston 7 is slidably mounted with respect to the inner walls delimiting the second chamber 4.

The double membrane pump 1 further comprises a device for detecting leakages 10 through at least one of the two membranes 6, 16. In particular, if one of the two membranes 6, 16 is damaged, the service fluid P3 is contaminated by one or both of the fluids present in the adjacent chambers (first chamber 3 and/or second chamber 4).

Advantageously, the device for detecting leakages 10 comprises:
- at least one first sensor 11 configured to detect a physical magnitude S representing a property of the fluid present in the intermediate chamber 5;
- a control module 12 configured to establish if the physical magnitude S detected by the first sensor 11 is associated with a first condition that is indicative of the mixing of the service fluid P3 with the fluid product P1, or with a second condition that is indicative of the mixing of the service fluid P3 with the hydraulic fluid P2, or with a third condition that is indicative of the mixing of the service fluid P3 both with the fluid product P1 and the hydraulic fluid P2.

The device for detecting leakages 10 also comprises a memory 13 configured to store:
- a first interval of values I1 of the physical magnitude S, which is associated with the first condition;
- a second interval of values I2 of the physical magnitude S, which is associated with the second condition;
- a third interval of values I3 of the physical magnitude S, which is associated with the third condition.

The first interval of values I1, the second interval of values I2 and the third interval of values I3 are distinct and not overlapped.

The control module 12 is configured to establish if the physical magnitude S detected by the first sensor 11 falls within the first interval of values I1 or within the second interval of values I2 or within the third interval of values 13.

Alternatively, the memory 13 is configured to store:
- a first threshold Th1 of the physical magnitude S, which is associated with the first condition;
- a second threshold Th2 of the physical magnitude S, which is associated with the second condition;
- a third threshold Th3 of the physical magnitude S, which is associated with the third condition.

The first threshold Th1, the second threshold Th2 and the third threshold Th3 are distinct.

In this case, the control module 12 is configured to establish if the physical magnitude S detected by the first sensor 11 is lower than only a single threshold, two thresholds or three.

Preferably, the device for detecting leakages 10 also comprises a temperature sensor (not shown). For example, the temperature sensor is arranged in such a way as to detect the temperature of the fluid present in the measurement chamber 14.

Advantageously, the double membrane pump 1 also comprises a measurement chamber 14 outside the pump body 2.

The measurement chamber 14 is in fluid communication with the intermediate chamber 5 so as to receive the service fluid P3. For example, the measurement chamber 14 is in fluid communication with the intermediate chamber 5 through a conduit 15 obtained in the pump body 2.

In optimal conditions (intact membranes 6, 16, i.e. not damaged), the measurement chamber 14 is filled with service fluid P3.

Preferably, the first sensor 11 is arranged on a first wall 14a delimiting the measurement chamber 14, as shown in figures 1 and 2.

The position and inclination of the first sensor 11 on the first wall 14a are chosen as a function of the type of service fluid P3 and the physical magnitude S that is to be detected.

In accordance with a first embodiment, illustrated in figure 1, the device for detecting leakages 10 further comprises a reflector 17 arranged on a second wall 14b delimiting the measurement chamber 14 and opposite the first wall 14a.

In this case, the first sensor 11 is an ultrasound sensor configured to generate sound waves having a frequency comprised between 20 kHz and 100 MHz and to receive the sound waves reflected back by the reflector 17.

In other words, the reflector 17 is located on the opposite side from the first sensor 11 with respect to the fluid filling the measurement chamber 14.

In an alternative embodiment not shown, the first sensor 11 is at least partially immersed in the fluid contained in the measurement chamber 14. In this case, the first sensor 11 is introduced into the measurement chamber 14 through slits or openings obtained in a wall delimiting the measurement chamber 14.

In this context, the term "reflector" is meant as any object having reflective properties. By way of example, a steel plate is to be understood as a reflector.

For example, the second wall 14b can be made of steel, thereby constituting in itself the reflector 17.

In the first embodiment, the first sensor 11 thus performs the function of emitter and receiver of the signal (here: sound wave), with the aid of a simple reflector 17. This configuration is known in the field as "Pulse Echo".

The physical magnitude S detected by the first sensor 11 is therefore a characteristic physical magnitude of the sound waves.

For example, in the first embodiment the physical magnitude S is chosen among: speed of the sound wave in the fluid, acoustic impedance of the fluid, travel time of the sound wave, attenuation of the sound wave in the fluid, spectrum of the reflected sound wave, amplitude of the reflected signal.

The choice of the physical magnitude S is connected to the fluids concerned, i.e. the fluid product P1 to homogenise, the service fluid P3 and the hydraulic fluid P2.

In a variation of the "Pulse Echo" configuration not shown, the use of a plurality of first sensors 11 is provided, installed on the first wall 14a or partially immersed in the fluid housed in the measurement chamber 14, each of which is configured to detect a different characteristic physical magnitude S of the sound waves.

Each of the first sensors 11 can be coupled with a corresponding reflector 17. Alternatively, by making the second wall 14b in steel, it acts as a single reflector 17 for all the first sensors 11.

In accordance with a second embodiment, illustrated in figure 2, two sensors are provided: one for emitting and the other for receiving the sound waves.

This configuration, known in the field as "Through Transmission", therefore provides at least one pair of sensors (emitter-receiver) between which the service fluid P3 is interposed.

The first sensor 11 is an ultrasound sensor configured to receive sound waves having a frequency comprised between 20 kHz and 100 MHz. In the following, the first sensor 11 is indicated as "receiver".

A second ultrasound sensor 21, indicated in the following as "emitter", is instead configured to generate sound waves having a frequency comprised between 20 kHz and 100 MHz.

In figure 2, the first sensor 11 is arranged on the first wall 14a of the measurement chamber 14, while the second sensor 21 is arranged on the second wall 14b, opposite the first wall 14a.

In an alternative embodiment not shown, both the first sensor 11 and the second sensor 21 are at least partially immersed in the fluid contained in the measurement chamber 14. In this case, the first sensor 11 and the second sensor 21 are introduced into the measurement chamber 14 through slits or openings obtained in a wall delimiting the measurement chamber 14.

For example, in the second embodiment, the physical magnitude S is chosen among: speed of the sound wave in the fluid, acoustic impedance of the fluid, travel time of the sound wave, attenuation of the sound wave in the fluid, resonance frequency.

The distance between the emitter and receiver, their position and their mutual inclination are chosen as a function of the characteristics of the service fluid P3 and of the physical magnitude S to be detected.

The choice of the physical magnitude S is connected to the fluids concerned, i.e. the fluid product P1 to homogenise, the service fluid P3 and the hydraulic fluid P2.

In one variation of the "Through Transmission" configuration not shown, the use of a plurality of first sensors 11 and second sensors 21 is provided, respectively installed on the first wall 14a and on the second wall 14b (or partially immersed in the fluid present in the measurement chamber 14), each of which is configured to detect/emit a different characteristic physical magnitude S of the sound waves.

In all the embodiments described, the control module 12 is configured to set various parameters of the sound wave, such as for example: the emission window, the amplification or attenuation of the sound wave, the time window within which to detect the characteristic physical magnitude of the sound wave.

Preferably, in both the first and in the second embodiment, the control module 12 is also configured to compare the physical magnitude S detected by the first sensor 11 with a reference value S_{rif} indicative of the service fluid P3 in the pure state, i.e. not mixed with the fluid product P1 to homogenise and/or with the hydraulic fluid P2. In response to a variance from the reference value S_{rif} that is higher than a pre-established tolerance Δ, the control module 12 generates a warning signal of the acoustic and/or luminous type.

Alternatively or in addition, the control module 12 generates a current signal 4-20 mA that can be viewed on a screen (e.g. on a PLC).

The control module 12 preferably consists of an electronic module, suitably programmed to perform the functions described above, which can correspond to different hardware and/or routine software entities belonging to the programmed module.

As an alternative to the ultrasound technique described above with reference to variant embodiments, it is also possible to use optical technologies, e.g. optical microscope or NIR technology (acronym for "Near Infra Red").

In the case of optical microscope technology, the first sensor 11 is an optical sensor and the physical magnitude detected is a light signal emitted by a source. Images are acquired of the fluid present in the intermediate chamber 5, whose analysis provides information on the contamination of the service fluid P3 by the fluid product P1 (thus the "first condition" applies) or by the hydraulic fluid P2 (thus the "second condition" applies) or by both part of the fluid product P1 and part of the hydraulic fluid P2 (thus the "third condition" applies).

In the case of NIR technology, a spectrophotometric analysis of the service fluid P3 is instead performed.

An NIR spectrophotometer is composed of a light source (e.g. a tungsten-halogen lamp), a monochromator, a sampler or an interface for the presentation of the sample and a detector for measuring the reflectance and transmittance (for example silicon, lead sulphate and indium and gallium arsenide).

From the above description, the characteristics of the double membrane pump for use in a homogenising apparatus of a fluid product and the method for detecting leakages in said pump, according to the present invention, are clear, as are the advantages.

In particular, the device for detecting leakages in the intermediate chamber allows distinguishing whether such leakages are associated with a damage/breakage of the "product-side" membrane or "piston-side" membrane or both.

In fact, the control module is able to establish if such damage/breakage concerns the first membrane (product side) or the second membrane

(piston side) or both thanks to the detection of a characteristic property of the service fluid contained between the membranes, which is respectively contaminated by the fluid product to homogenise or by the hydraulic fluid in which the piston is immersed or by both these fluids.

In the first case, in fact, the fluid product to homogenise mixes with the service fluid, contaminating it and causing a "first condition" detectable by means of the measurement of the physical magnitude chosen.

Since the damage implies a "product-side" contamination, the stop of the homogenising apparatus can follow.

In the second case, instead, the service fluid is contaminated by the hydraulic fluid ("second condition") for which it may not be necessary to stop the homogenising apparatus, as long as the "product side" is preserved from the contamination.

In the third case, the contamination of the service fluid occurs both "product side" and "piston side", thus the stop of the homogenising apparatus follows.

Choosing intervals of values (or thresholds) which are distinct and not overlapped in physical magnitude, it is possible to discriminate which membrane is damaged/broken and certain (various) actions can be carried out on the homogenising apparatus employing the double membrane pump.

The proposed solution allows identifying in advance which membrane is damaged/broken, avoiding stopping the system and removing parts when it is not necessary.

In addition, the ability to detect different physical magnitudes allows using the proposed method with the various treated fluid products.

## Claims

1. Double membrane pump (1) for use in a homogenising apparatus of a fluid product (P1), comprising:
- a pump body (2);
- a first chamber (3) housing the fluid product (P1) to homogenise, said first chamber (3) being obtained in the pump body (2);
- a second chamber (4) housing a hydraulic fluid (P2), said second chamber (4) being obtained in the pump body (2);
- a first membrane (6) and a second membrane (16) mutually spaced in such a way as to define an intermediate chamber (5) containing a service fluid (P3), said intermediate chamber (5) being obtained in the pump body (2), said first membrane (6) being interposed between the first chamber (3) and the intermediate chamber (5) so as to separate them, said second membrane (16) being interposed between the intermediate chamber (5) and the second chamber (4) so as to separate them;
- a piston (7) partially housed in the second chamber (4) and slidably mounted therein;
- a device for detecting leakages (10) through at least one of said membranes (6, 16),
**characterised in that** said device for detecting leakages (10) comprises:
- at least one first sensor (11) configured to detect a physical magnitude (S) representing a property of the fluid present in said intermediate chamber (5);
- a control module (12) configured to establish if the physical magnitude (S) detected by the first sensor (11) is associated with a first condition that is indicative of the mixing of the service fluid (P3) with the fluid product (P1), or if said physical magnitude (S) detected is associated with a second condition that is indicative of the mixing of the service fluid (P3) with the hydraulic fluid (P2), or if said physical magnitude (S) detected is associated with a third condition that is indicative of the mixing of the service fluid (P3) both with the fluid product (P1) and the hydraulic fluid (P2).

2. Double membrane pump (1) according to claim 1, wherein said device for detecting leakages (10) further comprises a memory (13) configured to store a first interval of values (11) of said physical magnitude (S) associated with said first condition, a second interval of values (12) of said physical magnitude (S) associated with said second condition and a third interval values (13) of said physical magnitude (S) associated with said third condition, said first interval of values (11), said second interval of values (12) and said third interval of values (13) being distinct and not overlapped, said control module (12) being configured to establish if the physical magnitude (S) detected by the first sensor (11) falls within said first interval of values (11) or within said second interval of values (12) or within said third interval of values (13).

3. Double membrane pump (1) according to claim 1, wherein said device for detecting leakages (10) further comprises a memory (13) configured to store a first threshold (Th1) of said physical magnitude (S) associated with said first condition, a second threshold (Th2) of said physical magnitude (S) associated with said second condition and a third threshold (Th3) of said physical magnitude (S) associated with said third condition, said first threshold (Th1), said second threshold (Th2) and said third threshold (Th3) being distinct, said control module (12) being configured to establish if the physical magnitude (S) detected by the first sensor (11) is below only one, two or all of said threshold (Th1, Th2, Th3).

4. Double membrane pump (1) according to any of the preceding claim, wherein said control module (12) is also configured to compare the physical magnitude (S) detected by the first sensor (11) with a reference value (S_{rif}) indicative of the service fluid (P3) at the pure state and, in response to a variance from said reference value (S_{rif}) that is higher than a pre-established tolerance (Δ), is configured to generate a warning signal and/or current signal.

5. Double membrane pump (1) according to claim 4, wherein said warning signal is of the acoustic or luminous type.

6. Double membrane pump (1) according to any of the preceding claims, further comprising a measurement chamber (14) located externally said pump body (2), said measurement chamber (14) being in fluid communication with said intermediate chamber (5).

7. Double membrane pump (1) according to claim 6, wherein said first sensor (11) is arranged on a first wall (14a) delimiting said measurement chamber (14).

8. Double membrane pump (1) according to claim 7, wherein said device for detecting leakages (10) further comprises a reflector (17) arranged on a second wall (14b) delimiting said measurement chamber (14) and opposed said first wall (14a), said at least one sensor (11) being an ultrasound sensor configured to generate sound waves having a frequency comprised between 20 kHz and 100 MHz and to receive the sound waves reflected back by said reflector (17), said physical magnitude (S) being a characteristic physical magnitude of sound waves.

9. Double membrane pump (1) according to claim 6, wherein said first sensor (11) is at least partially immersed in the fluid contained in the measurement chamber (14).

10. Double membrane pump (1) according to claim 9, wherein said device for detecting leakages (10) further comprises a reflector (17) arranged on a wall (14b) delimiting said measurement chamber (14), said at least one sensor (11) being an ultrasound sensor configured to generate sound waves having a frequency comprised between 20 kHz and 100 MHz and to receive the sound waves reflected back by said reflector (17), said physical magnitude (S) being a characteristic physical magnitude of sound waves.

11. Double membrane pump (1) according to claim 8 or 10, wherein said physical magnitude (S) is chosen among: speed of the sound wave in the fluid contained in the measurement chamber (14), acoustic impedance of the fluid contained in the measurement chamber (14), travel time of the sound wave, attenuation of the sound wave in the fluid contained in the measurement chamber (14), spectrum of the reflected sound wave, amplitude of the reflected wave.

12. Double membrane pump (1) according to claim 7, wherein said device for detecting leakages (10) further comprises a second sensor (21) arranged on a second wall (14b) delimiting said measurement chamber (14) and opposed said first wall (14a), said second sensor (21) being an ultrasound sensor configured to generate sound waves having a frequency comprised between 20 kHz and 100 MHz and said at least one first sensor (11) being an ultrasound sensor configured to receive sound waves having a frequency comprised between 20 kHz and 100 MHz, said physical magnitude (S) being a characteristic physical magnitude of sound waves.

13. Double membrane pump (1) according to claim 9, wherein said device for detecting leakages (10) further comprises a second sensor (21) at least partially immersed in the fluid contained in the measurement chamber (14), said second sensor (21) being an ultrasound sensor configured to generate sound waves having a frequency comprised between 20 kHz and 100 MHz and said at least one first sensor (11) being an ultrasound sensor configured to receive sound waves having a frequency comprised between 20 kHz and 100 MHz, said physical magnitude (S) being a characteristic physical magnitude of sound waves.

14. Double membrane pump (1) according to claim 12 or 13, wherein said physical magnitude (S) is chosen among: speed of the sound wave in the fluid contained in the measurement chamber (14), acoustic impedance of the fluid contained in the measurement chamber (14), travel time of the sound wave, attenuation of the sound wave in the fluid contained in said measurement chamber (14), resonance frequency.

15. Double membrane pump (1) according to any of the preceding claims, wherein said device for detecting leakages (10) comprises a temperature sensor.

16. Method for detecting leakages of a service fluid (P3) contained within two membranes (6, 16) that separate a hydraulic section containing a hydraulic fluid (P2) from a working section containing a fluid product (P1) to be homogenised in a double membrane pump (1), said method comprising the steps of:
- detecting a physical magnitude (S) representing a property of the fluid contained within said membranes (6, 16);
- establishing if the physical magnitude (S) detected is associated with a first condition that is indicative of the mixing of the service fluid (P3) with the fluid product (P1), or if said physical magnitude (S) detected is associated with a second condition that is indicative of the mixing of the service fluid (P3) with the hydraulic fluid (P2), or if said physical magnitude (S) detected is associated with a third condition that is indicative of the mixing of the service fluid (P3) both with the fluid product (P1) and the hydraulic fluid (P2).

17. Method according to claim 16, wherein said step of establishing if the physical magnitude (S) detected is associated with the first or the second or the third condition consists in verifying if said physical magnitude (S) falls within a first interval of values (11) associated with the first condition or within a second interval of values (12) associated with the second condition or within a third interval of values (13) associated with the third condition, said first interval of values (11), said second interval of values (12) and said third interval of values (13) being distinct and not overlapped.

18. Method according to claim 16 or 17, further comprising a step of comparing the physical magnitude (S) detected with a reference value (S_{rif}) indicative of the service fluid (P3) at the pure state and, in response to a variance from said reference value (S_{rif}) that is higher than a pre-established tolerance (Δ), comprising a step of generating a warning signal and/or current signal.

19. Method according to any of the claims 16 to 18, further comprising the steps of:
- generating a first sound wave having a frequency comprised between 20 kHz and 100 MHz and sending it to the service fluid (P3);
- receiving the first sound wave after it has passed through the service fluid (P3), said physical magnitude (S) being a characteristic physical magnitude of the first sound wave so that the step of detecting the physical magnitude (S) is carried out by measuring said physical magnitude (S) in the first sound wave received after it has passed through the service fluid (P3).

20. Method according to claim 19, wherein the generation of the first sound wave and the receipt of the first sound wave after it has passed through the service fluid (P3) are carried out by two different ultrasound sensors (11, 21).

21. Method according to claim 20, wherein said physical magnitude (S) is chosen among: speed of the sound wave in the service fluid (P3), acoustic impedance of the service fluid (P3), travel time of the sound wave, attenuation of the sound wave in the service fluid (P3), resonance frequency.

22. Method according to claim 19, wherein said first sound wave is generated by a first ultrasound sensor (11), is reflected back by a reflector (17) and is received by said first ultrasound sensor (11).

23. Method according to claim 22, wherein said physical magnitude (S) is chosen among: speed of the sound wave in the service fluid (P3), acoustic impedance of the service fluid (P3), travel time of the sound wave, attenuation of the sound wave in the service fluid (P3), spectrum of the reflected sound wave, amplitude of the reflected signal.

24. Method according to any of the claims 16 to 18, further comprising the steps of:
- generating a first light radiation in the infrared or near infrared spectrum and sending it to the service fluid (P3);
- receiving said first light radiation after it has passed through the service fluid (P3), said physical magnitude (S) being a characteristic physical magnitude of the first light radiation for which the step of detecting the physical magnitude (S) is carried out by measuring said physical magnitude (S) in the first light radiation received after passing through the service fluid (P3).

## Patentansprüche

1. Doppelmembranpumpe (1) zur Verwendung in einer Vorrichtung zur Homogenisierung eines flüssigen Produkts (P1), umfassend:
- einen Pumpenkörper (2);
- eine erste Kammer (3), in der das flüssige Produkt (P1) untergebracht ist, das homogenisiert werden soll, wobei die erste Kammer (3) im Pumpenkörper (2) ausgebildet ist;
- eine zweite Kammer (4), in der eine Hydraulikflüssigkeit (P2) untergebracht ist, wobei die zweite Kammer (4) in dem Pumpenkörper (2) ausgebildet ist;
- eine erste Membran (6) und eine zweite Membran (16), die voneinander beabstandet sind, sodass sie eine Zwischenkammer (5) definieren, die eine Betriebsflüssigkeit (P3) enthält, wobei die Zwischenkammer (5) im Pumpenkörper (2) ausgebildet ist, wobei die erste Membran (6) zwischen der ersten Kammer (3) und der Zwischenkammer (5) angeordnet ist, um sie zu trennen, wobei die zweite Membran (16) zwischen der Zwischenkammer (5) und der zweiten Kammer (4) angeordnet ist, um sie zu trennen;
- einen Kolben (7), der teilweise in der zweiten Kammer (4) untergebracht und verschiebbar darin montiert ist;
- eine Vorrichtung zum Erkennen von Leckagen (10) durch zumindest eine der Membranen (6, 16),
**dadurch gekennzeichnet, dass** die Vorrichtung zum Erkennen von Leckagen (10) umfasst:
- zumindest einen ersten Sensor (11), der konfiguriert ist, um eine physikalische Größe (S) zu erkennen, die eine Eigenschaft der in der Zwischenkammer (5) vorhandenen Flüssigkeit darstellt;
- ein Steuermodul (12), das konfiguriert ist, um festzustellen, ob die vom ersten Sensor (11) erkannte physikalische Größe (S) mit einem ersten Zustand assoziiert ist, der das Mischen der Betriebsflüssigkeit (P3) mit dem flüssigen Produkt (P1) anzeigt oder ob die erkannte physikalische Größe (S) mit einem zweiten Zustand assoziiert ist, der das Mischen der Betriebsflüssigkeit (P3) mit der Hydraulikflüssigkeit (P2) anzeigt, oder ob die erkannte physikalische Größe (S) mit einem dritten Zustand assoziiert ist, der das Mischen der Betriebsflüssigkeit (P3) sowohl mit dem flüssigen Produkt (P1) als auch mit der Hydraulikflüssigkeit (P2) anzeigt.

2. Doppelmembranpumpe (1) nach Anspruch 1, wobei die Vorrichtung zum Erkennen von Leckagen (10) ferner einen Speicher (13) umfasst, der konfiguriert ist, um ein erstes Intervall von Werten (I1) der physikalischen Größe (S), das mit dem ersten Zustand assoziiert ist, ein zweites Intervall von Werten (I2) der physikalischen Größe (S), das mit dem zweiten Zustand assoziiert ist, und ein drittes Intervall von Werten (I3) der physikalischen Größe (S), das mit dem dritten Zustand assoziiert sind, zu speichern, wobei das erste Intervall von Werten (I1), das zweite Intervall von Werten (I2) und das dritte Intervall von Werten (I3) verschieden sind und sich nicht überlappen, wobei das Steuermodul (12) konfiguriert ist, um festzustellen, ob die vom ersten Sensor (11) erkannte physikalische Größe (S) innerhalb des ersten Intervalls von Werten (I1) oder innerhalb des zweiten Intervalls von Werten (I2) oder innerhalb des dritten Intervalls von Werten (I3) fällt.

3. Doppelmembranpumpe (1) nach Anspruch 1, wobei die Vorrichtung zum Erkennen von Leckagen (10) ferner einen Speicher (13) umfasst, der konfiguriert ist, um einen ersten Schwellenwert (Th1) der physikalischen Größe (S), der mit dem ersten Zustand assoziiert ist, einen zweiten Schwellenwert (Th2) der physikalischen Größe (S), der mit dem zweiten Zustand assoziiert ist, und einen dritten Schwellenwert (Th3) der physikalischen Größe (S), der mit dem dritten Zustand assoziiert ist, zu speichern, wobei der erste Schwellenwert (Th1), der zweite Schwellenwert (Th2) und der dritte Schwellenwert (Th3) verschieden sind, wobei das Steuermodul (12) konfiguriert ist, um festzustellen, ob die vom ersten Sensor (11) erkannte physikalische Größe (S) nur unter einem, zwei oder allen der Schwellenwerte (Th1, Th2, Th3) liegt.

4. Doppelmembranpumpe (1) nach einem der vorhergehenden Ansprüche, wobei das Steuermodul (12) auch konfiguriert ist, um die vom ersten Sensor (11) erkannte physikalische Größe (S) mit einem Referenzwert (S_{rif}) zu vergleichen, der die Betriebsflüssigkeit (P3) im reinen Zustand anzeigt und als Reaktion auf eine Abweichung von dem Referenzwert (S_{rif}), die höher als eine vorgegebene Toleranz (Δ) ist, konfiguriert ist, um ein Warnsignal und/oder ein Stromsignal zu erzeugen.

5. Doppelmembranpumpe (1) nach Anspruch 4, wobei das Warnsignal vom akustischen oder leuchtenden Typ ist.

6. Doppelmembranpumpe (1) nach einem der vorhergehenden Ansprüche, ferner umfassend eine Messkammer (14), die außerhalb des Pumpenkörpers (2) angeordnet ist, wobei die Messkammer (14) in Fluidkommunikation mit der Zwischenkammer (5) steht.

7. Doppelmembranpumpe (1) nach Anspruch 6, wobei der erste Sensor (11) an einer ersten Wand (14a) angeordnet ist, die die Messkammer (14) begrenzt.

8. Doppelmembranpumpe (1) nach Anspruch 7, wobei die Vorrichtung zum Erkennen von Leckagen (10) ferner einen Reflektor (17) umfasst, der an einer zweiten Wand (14b) angeordnet ist, die die Messkammer (14) begrenzt und der ersten Wand (14a) gegenüberliegt, wobei zumindest ein Sensor (11) ein Ultraschallsensor ist, der konfiguriert ist, um Schallwellen mit einer Frequenz zwischen 20 kHz und 100 MHz zu erzeugen und die von dem Reflektor (17) zurückreflektierten Schallwellen zu empfangen, wobei die physikalische Größe (S) eine charakteristische physikalische Größe von Schallwellen ist.

9. Doppelmembranpumpe (1) nach Anspruch 6, wobei der erste Sensor (11) zumindest teilweise in die in der Messkammer (14) enthaltene Flüssigkeit eingetaucht ist.

10. Doppelmembranpumpe (1) nach Anspruch 9, wobei die Vorrichtung zum Erkennen von Leckagen (10) ferner einen Reflektor (17) umfasst, der an einer Wand (14b) angeordnet ist, die die Messkammer (14) begrenzt, wobei zumindest ein Sensor (11) ein Ultraschallsensor ist, der konfiguriert ist, um Schallwellen mit einer Frequenz zwischen 20 kHz und 100 MHz zu erzeugen und die von dem Reflektor (17) zurückreflektierten Schallwellen zu empfangen, wobei die physikalische Größe (S) eine charakteristische physikalische Größe von Schallwellen ist.

11. Doppelmembranpumpe (1) nach Anspruch 8 oder 10, wobei die physikalische Größe (S) ausgewählt ist aus: Geschwindigkeit der Schallwelle in der in der Messkammer (14) enthaltenen Flüssigkeit, akustische Impedanz der in der Messkammer (14) enthaltenen Flüssigkeit, Laufzeit der Schallwelle, Dämpfung der Schallwelle in der in der Messkammer (14) enthaltenen Flüssigkeit, Spektrum der reflektierten Schallwelle, Amplitude der reflektierten Welle.

12. Doppelmembranpumpe (1) nach Anspruch 7, wobei die Vorrichtung zum Erkennen von Leckagen (10) ferner einen zweiten Sensor (21) umfasst, der an einer zweiten Wand (14b) angeordnet ist, die die Messkammer (14) begrenzt und der ersten Wand (14a) gegenüberliegt, wobei der zweite Sensor (21) ein Ultraschallsensor ist, der konfiguriert ist, um Schallwellen mit einer Frequenz zwischen 20 kHz und 100 MHz zu erzeugen, und der zumindest erste Sensor (11) ein Ultraschallsensor ist, der konfiguriert ist, um Schallwellen mit einer Frequenz zwischen 20 kHz und 100 MHz zu empfangen, wobei die physikalische Größe (S) eine charakteristische physikalische Größe von Schallwellen ist.

13. Doppelmembranpumpe (1) nach Anspruch 9, wobei die Vorrichtung zum Erkennen von Leckagen (10) ferner einen zweiten Sensor (21) umfasst, der zumindest teilweise in die in der Messkammer (14) enthaltene Flüssigkeit eingetaucht ist, wobei der zweite Sensor (21) ein Ultraschallsensor ist, der konfiguriert ist, um Schallwellen mit einer Frequenz zwischen 20 kHz und 100 MHz zu erzeugen, und der zumindest erste Sensor (11) ein Ultraschallsensor ist, der konfiguriert ist, um Schallwellen mit einer Frequenz zwischen 20 kHz und 100 MHz zu empfangen, wobei die physikalische Größe (S) eine charakteristische physikalische Größe von Schallwellen ist.

14. Doppelmembranpumpe (1) nach Anspruch 12 oder 13, wobei die physikalische Größe (S) ausgewählt ist aus: Geschwindigkeit der Schallwelle in der in der Messkammer (14) enthaltenen Flüssigkeit, akustische Impedanz der in der Messkammer (14) enthaltenen Flüssigkeit, Laufzeit der Schallwelle, Dämpfung der Schallwelle in der in der Messkammer (14) enthaltenen Flüssigkeit, Frequenzresonanz.

15. Doppelmembranpumpe (1) nach einem der vorhergehenden Ansprüche, wobei die Vorrichtung zum Erkennen von Leckagen (10) einen Temperatursensor umfasst.

16. Verfahren zum Erkennen von Leckagen einer Betriebsflüssigkeit (P3), die in zwei Membranen (6, 16) enthalten ist, die einen Hydraulikabschnitt, der eine Hydraulikflüssigkeit (P2) enthält, von einem Arbeitsabschnitt trennen, der ein flüssiges Produkt (P1) enthält, das in einer Doppelmembranpumpe (1) homogenisiert werden soll, wobei das Verfahren die Schritte umfasst:
- Erkennen einer physikalischen Größe (S), die eine Eigenschaft der in den Membranen (6, 16) enthaltenen Flüssigkeit darstellt;
- Feststellen, ob die erkannte physikalische Größe (S) mit einem ersten Zustand assoziiert ist, der das Mischen der Betriebsflüssigkeit (P3) mit dem flüssigen Produkt (P1) anzeigt oder ob die erkannte physikalische Größe (S) mit einem zweiten Zustand assoziiert ist, der das Mischen der Betriebsflüssigkeit (P3) mit der Hydraulikflüssigkeit (P2) anzeigt, oder ob die erkannte physikalische Größe (S) mit einem dritten Zustand assoziiert ist, der das Mischen der Betriebsflüssigkeit (P3) sowohl mit dem flüssigen Produkt (P1) als auch mit der Hydraulikflüssigkeit (P2) anzeigt.

17. Verfahren nach Anspruch 16, wobei der Schritt zum Feststellen, ob die erkannte physikalische Größe (S) mit dem ersten oder dem zweiten oder dem dritten Zustand assoziiert ist, darin besteht, zu überprüfen, ob die physikalische Größe (S) innerhalb eines ersten Intervalls von Werten (I1), das mit dem ersten Zustand assoziiert ist oder innerhalb eines zweiten Intervalls von Werten (I2), das mit dem zweiten Zustand assoziiert ist, oder innerhalb eines dritten Intervalls von Werten (I3), das mit dem dritten Zustand assoziiert ist, fällt, wobei das erste Intervall von Werten (I1), das zweite Intervall von Werten (I2) und das dritte Intervall von Werten (I3) verschieden sind und sich nicht überlappen.

18. Verfahren nach Anspruch 16 oder 17, ferner umfassend einen Schritt zum Vergleichen der erkannten physikalischen Größe (S) mit einem Referenzwert (S_{rif}), der die Betriebsflüssigkeit (P3) im reinen Zustand anzeigt, und als Reaktion auf eine Abweichung von diesem Referenzwert (S_{rif}), der höher als eine vorgegebene Toleranz (Δ) ist und einen Schritt zum Erzeugen eines Warnsignals und/oder eines Stromsignals umfasst.

19. Verfahren nach einem der Ansprüche 16 bis 18, ferner umfassend die Schritte zum:
- Erzeugen einer ersten Schallwelle mit einer Frequenz zwischen 20 kHz und 100 MHz und deren Senden an die Betriebsflüssigkeit (P3);
- Empfangen der ersten Schallwelle, nachdem sie die Betriebsflüssigkeit (P3) durchlaufen hat, wobei die physikalische Größe (S) eine charakteristische physikalische Größe der ersten Schallwelle ist, so dass der Schritt zum Erkennen der physikalischen Größe (S) durch Messen der physikalischen Größe (S) in der ersten Schallwelle ausgeführt wird, die empfangen wird, nachdem sie die Betriebsflüssigkeit (P3) durchlaufen hat.

20. Verfahren nach Anspruch 19, wobei die Erzeugung der ersten Schallwelle und der Empfang der ersten Schallwelle, nachdem sie die Betriebsflüssigkeit (P3) durchlaufen hat, von zwei verschiedenen Ultraschallsensoren (11, 21) ausgeführt werden.

21. Verfahren nach Anspruch 20, wobei die physikalische Größe (S) ausgewählt ist aus: Geschwindigkeit der Schallwelle in der Betriebsflüssigkeit (P3), akustische Impedanz der Betriebsflüssigkeit (P3), Laufzeit der Schallwelle, Dämpfung der Schallwelle in der Betriebsflüssigkeit (P3), Resonanzfrequenz.

22. Verfahren nach Anspruch 19, wobei die erste Schallwelle von einem ersten Ultraschallsensor (11) erzeugt wird, von einem Reflektor (17) zurückreflektiert wird und von dem ersten Ultraschallsensor (11) empfangen wird.

23. Verfahren nach Anspruch 22, wobei die physikalische Größe (S) ausgewählt ist aus: Geschwindigkeit der Schallwelle in der Betriebsflüssigkeit (P3), akustische Impedanz der Betriebsflüssigkeit (P3), Laufzeit der Schallwelle, Dämpfung der Schallwelle in der Betriebsflüssigkeit (P3), Spektrum der reflektierten Schallwelle, Amplitude des reflektierten Signals.

24. Verfahren nach einem der Ansprüche 16 bis 18, ferner umfassend die Schritte zum:
- Erzeugen einer ersten Lichtstrahlung im Infrarot- oder Nahinfrarotspektrum und deren Senden an die Betriebsflüssigkeit (P3);
- Empfangen der ersten Lichtstrahlung, nachdem sie die Betriebsflüssigkeit (P3) durchlaufen hat, wobei die physikalische Größe (S) eine charakteristische physikalische Größe der ersten Lichtstrahlung ist, für die der Schritt zum Erkennen der physikalischen Größe (S) durch Messen der physikalischen Größe (S) in der ersten Lichtstrahlung ausgeführt wird, die empfangen wird, nachdem sie die Betriebsflüssigkeit (P3) durchlaufen hat.

## Revendications

1. Pompe à double membrane (1) utilisée dans un appareil d'homogénéisation d'un produit fluide (P1), comprenant :
- un corps de pompe (2) ;
- une première chambre (3) logeant le produit fluide (P1) à homogénéiser, ladite première chambre (3) étant obtenue dans le corps de pompe (2) ;
- une seconde chambre (4) logeant un fluide hydraulique (P2), ladite seconde chambre (4) étant obtenue dans le corps de pompe (2) ;
- une première membrane (6) et une seconde membrane (16) mutuellement espacées de manière à définir une chambre intermédiaire (5) contenant un fluide de service (P3), ladite chambre intermédiaire (5) étant obtenue dans le corps de pompe (2), ladite première membrane (6) étant interposée entre la première chambre (3) et la chambre intermédiaire (5) de manière à les séparer, ladite seconde membrane (16) étant interposée entre la chambre intermédiaire (5) et la seconde chambre (4) de manière à les séparer ;
- un piston (7) partiellement logé dans la seconde chambre (4) et monté coulissant en son sein ;
- un dispositif de détection de fuites (10) à travers au moins une desdites membranes (6, 16),
**caractérisée en ce que** ledit dispositif de détection de fuites (10) comprend :
- au moins un premier capteur (11) configuré pour détecter une grandeur physique (S) représentant une propriété du fluide présent dans ladite chambre intermédiaire (5) ;
- un module de contrôle (12) configuré pour établir si la grandeur physique (S) détectée par le premier capteur (11) est associée à une première condition étant indicative du mélange du fluide de service (P3) avec le produit fluide (P1), ou si ladite grandeur physique (S) détectée est associée à une seconde condition étant indicative du mélange du fluide de service (P3) avec le fluide hydraulique (P2), ou si ladite grandeur physique (S) détectée est associée à une troisième condition étant indicative du mélange du fluide de service (P3) à la fois avec le produit fluide (P1) et le fluide hydraulique (P2).

2. Pompe à double membrane (1) selon la revendication 1, dans laquelle ledit dispositif de détection de fuites (10) comprend de plus une mémoire (13) configurée pour stocker un premier intervalle de valeurs (I1), de ladite grandeur physique (S), associé à ladite première condition, un second intervalle de valeurs (I2), de ladite grandeur physique (S), associé à ladite seconde condition et un troisième intervalle de valeurs (I3), de ladite grandeur physique (S), associé à ladite troisième condition, ledit premier intervalle de valeurs (I1), ledit second intervalle de valeurs (I2) et ledit troisième intervalle de valeurs (I3) étant distincts et ne se chevauchant pas, ledit module de contrôle (12) étant configuré pour établir si la grandeur physique (S) détectée par le premier capteur (11) tombe dans ledit premier intervalle de valeurs (I1) ou dans ledit second intervalle de valeurs (I2) ou dans ledit troisième intervalle de valeurs (I3).

3. Pompe à double membrane (1) selon la revendication 1, dans laquelle ledit dispositif de détection de fuites (10) comprend de plus une mémoire (13) configurée pour stocker un premier seuil (Th1), de ladite grandeur physique (S), associé à ladite première condition, un deuxième seuil (Th2), de ladite grandeur physique (S), associé à ladite seconde condition et un troisième seuil (Th3), de ladite grandeur physique (S), associé à ladite troisième condition, ledit premier seuil (Th1), ledit second seuil (Th2) et ledit troisième seuil (Th3) étant distincts, ledit module de contrôle (12) étant configuré pour établir si la grandeur physique (S) détectée par le premier capteur (11) est inférieure à seulement un, deux ou tous lesdits seuils (Th1, Th2, Th3).

4. Pompe à double membrane (1) selon l'une quelconque des revendications précédentes, dans laquelle ledit module de contrôle (12) est aussi configuré pour comparer la grandeur physique (S) détectée par le premier capteur (11) à une valeur de référence (S_{rif}) indicative du fluide de service (P3) à l'état pur et, en réponse à un écart par rapport à ladite valeur de référence (S_{rif}) étant supérieur à une tolérance préétablie (Δ), est configuré pour générer un signal d'avertissement et/ou un signal de courant.

5. Pompe à double membrane (1) selon la revendication 4, dans laquelle ledit signal d'avertissement est de type acoustique ou lumineux.

6. Pompe à double membrane (1) selon l'une quelconque des revendications précédentes, comprenant de plus une chambre de mesure (14) située extérieurement audit corps de pompe (2), ladite chambre de mesure (14) étant en communication fluidique avec ladite chambre intermédiaire (5).

7. Pompe à double membrane (1) selon la revendication 6, dans laquelle ledit premier capteur (11) est disposé sur une première paroi (14a) délimitant ladite chambre de mesure (14).

8. Pompe à double membrane (1) selon la revendication 7, dans laquelle ledit dispositif de détection de fuites (10) comprend de plus un réflecteur (17) disposé sur une seconde paroi (14b) délimitant ladite chambre de mesure (14) et opposée à ladite première paroi (14a), ledit au moins un capteur (11) étant un capteur à ultrasons configuré pour générer des ondes sonores ayant une fréquence comprise entre 20 kHz et 100 MHz et pour recevoir les ondes sonores réfléchies par ledit réflecteur (17), ladite grandeur physique (S) étant une grandeur physique caractéristique des ondes sonores.

9. Pompe à double membrane (1) selon la revendication 6, dans laquelle ledit premier capteur (11) est au moins partiellement immergé dans le fluide contenu dans la chambre de mesure (14).

10. Pompe à double membrane (1) selon la revendication 9, dans laquelle ledit dispositif de détection de fuites (10) comprend de plus un réflecteur (17) disposé sur une paroi (14b) délimitant ladite chambre de mesure (14), ledit au moins un capteur (11) étant un capteur à ultrasons configuré pour générer des ondes sonores ayant une fréquence comprise entre 20 kHz et 100 MHz et pour recevoir les ondes sonores réfléchies par ledit réflecteur (17), ladite grandeur physique (S) étant une grandeur physique caractéristique des ondes sonores.

11. Pompe à double membrane (1) selon la revendication 8 ou 10, dans laquelle ladite grandeur physique (S) est choisie parmi : la vitesse de l'onde sonore dans le fluide contenu dans la chambre de mesure (14), l'impédance acoustique du fluide contenu dans la chambre de mesure (14), le temps de propagation de l'onde sonore, l'atténuation de l'onde sonore dans le fluide contenu dans la chambre de mesure (14), le spectre de l'onde sonore réfléchie, l'amplitude de l'onde réfléchie.

12. Pompe à double membrane (1) selon la revendication 7, dans laquelle ledit dispositif de détection de fuites (10) comprend de plus un second capteur (21) disposé sur une seconde paroi (14b) délimitant ladite chambre de mesure (14) et opposée à ladite première paroi (14a), ledit second capteur (21) étant un capteur à ultrasons configuré pour générer des ondes sonores ayant une fréquence comprise entre 20 kHz et 100 MHz et ledit au moins un premier capteur (11) étant un capteur à ultrasons configuré pour recevoir des ondes sonores ayant une fréquence comprise entre 20 kHz et 100 MHz, ladite grandeur physique (S) étant une grandeur physique caractéristique des ondes sonores.

13. Pompe à double membrane (1) selon la revendication 9, dans laquelle ledit dispositif de détection de fuites (10) comprend de plus un second capteur (21) au moins partiellement immergé dans le fluide contenu dans la chambre de mesure (14), ledit second capteur (21) étant un capteur à ultrasons configuré pour générer des ondes sonores ayant une fréquence comprise entre 20 kHz et 100 MHz et ledit au moins un premier capteur (11) étant un capteur à ultrasons configuré pour recevoir des ondes sonores ayant une fréquence comprise entre 20 kHz et 100 MHz, ladite grandeur physique (S) étant une grandeur physique caractéristique des ondes sonores.

14. Pompe à double membrane (1) selon la revendication 12 ou 13, dans laquelle ladite grandeur physique (S) est choisie parmi : la vitesse de l'onde sonore dans le fluide contenu dans la chambre de mesure (14), l'impédance acoustique du fluide contenu dans la chambre de mesure (14), le temps de propagation de l'onde sonore, l'atténuation de l'onde sonore dans le fluide contenu dans ladite chambre de mesure (14), la fréquence de résonance.

15. Pompe à double membrane (1) selon l'une quelconque des revendications précédentes, dans laquelle ledit dispositif de détection de fuites (10) comprend un capteur de température.

16. Procédé de détection de fuites d'un fluide de service (P3) contenu à l'intérieur de deux membranes (6, 16) qui séparent une section hydraulique contenant un fluide hydraulique (P2) d'une section de travail contenant un produit fluide (P1) à homogénéiser dans une pompe à double membrane (1), ledit procédé comprenant les étapes de :
- détecter une grandeur physique (S) représentant une propriété du fluide contenu à l'intérieur desdites membranes (6, 16) ;
- établir si la grandeur physique (S) détectée est associée à une première condition étant indicative du mélange du fluide de service (P3) avec le produit fluide (P1), ou si ladite grandeur physique (S) détectée est associée à une seconde condition étant indicative du mélange du fluide de service (P3) avec le fluide hydraulique (P2), ou si ladite grandeur physique (S) détectée est associée à une troisième condition étant indicative du mélange du fluide de service (P3) à la fois avec le produit fluide (P1) et le fluide hydraulique (P2).

17. Procédé selon la revendication 16, dans lequel ladite étape consistant à établir si la grandeur physique (S) détectée est associée à la première ou la seconde ou la troisième condition consiste à vérifier si ladite grandeur physique (S) tombe dans un premier intervalle de valeurs (I1) associé à la première condition ou dans un second intervalle de valeurs (I2) associé à la seconde condition ou dans un troisième intervalle de valeurs (I3) associé à la troisième condition, ledit premier intervalle de valeurs (I1), ledit second intervalle de valeurs (I2) et ledit troisième intervalle de valeurs (I3) étant distincts et ne se chevauchant pas.

18. Procédé selon la revendication 16 ou 17, comprenant de plus une étape consistant à comparer la grandeur physique (S) détectée avec une valeur de référence (S_{rif}) indicative du fluide de service (P3) à l'état pur et, en réponse à un écart par rapport à ladite valeur de référence (S_{rif}) étant supérieure à une tolérance préétablie (Δ), comprenant une étape consistant à générer un signal d'avertissement et/ou un signal de courant.

19. Procédé selon l'une quelconque des revendications 16 à 18, comprenant de plus les étapes de :
- générer une première onde sonore ayant une fréquence comprise entre 20 kHz et 100 MHz et l'envoyer au fluide de service (P3) ;
- recevoir la première onde sonore après qu'elle soit passée à travers le fluide de service (P3), ladite grandeur physique (S) étant une grandeur physique caractéristique de la première onde sonore de sorte que l'étape de détection de la grandeur physique (S) est effectuée en mesurant ladite grandeur physique (S) dans la première onde sonore reçue après qu'elle soit passée à travers le fluide de service (P3).

20. Procédé selon la revendication 19, dans lequel la génération de la première onde sonore et la réception de la première onde sonore après son passage à travers le fluide de service (P3) sont effectuées par deux capteurs à ultrasons (11, 21) différents.

21. Procédé selon la revendication 20, dans lequel ladite grandeur physique (S) est choisie parmi : la vitesse de l'onde sonore dans le fluide de service (P3), l'impédance acoustique du fluide de service (P3), le temps de propagation de l'onde sonore, l'atténuation de l'onde sonore dans le fluide de service (P3), la fréquence de résonance.

22. Procédé selon la revendication 19, dans lequel ladite première onde sonore est générée par un premier capteur d'ultrasons (11), est réfléchie par un réflecteur (17) et est reçue par ledit premier capteur d'ultrasons (11).

23. Procédé selon la revendication 22, dans lequel ladite grandeur physique (S) est choisie parmi : la vitesse de l'onde sonore dans le fluide de service (P3), l'impédance acoustique du fluide de service (P3), le temps de propagation de l'onde sonore, l'atténuation de l'onde sonore dans le fluide de service (P3), le spectre de l'onde sonore réfléchie, l'amplitude du signal réfléchi.

24. Procédé selon l'une quelconque des revendications 16 à 18, comprenant de plus les étapes de :
- générer un premier rayonnement lumineux dans le spectre infrarouge ou du proche infrarouge et l'envoyer au fluide de service (P3) ;
- recevoir ledit premier rayonnement lumineux après qu'il a traversé le fluide de service (P3), ladite grandeur physique (S) étant une grandeur physique caractéristique du premier rayonnement lumineux pour lequel l'étape de détection de la grandeur physique (S) est effectuée en mesurant ladite grandeur physique (S) dans le premier rayonnement lumineux reçu après avoir traversé le fluide de service (P3).
